# EUROPÄISCHE PATENTSCHRIFT

(11) **EP 0 545 456 B1**
(45) Veröffentlichungstag und Bekanntmachung des Hinweises auf die Patenterteilung: **03.02.1999**
(21) Anmeldenummer: 92203523.3
(22) Anmeldetag: 17.11.1992
(51) Int. Cl.: H04N 7/18

(54) **Videoüberwachungsanlage**
Video surveillance device
Dispositif de surveillance vidéo

(30) Priorität: 23.11.1991 DE 4138538
(43) Veröffentlichungstag der Anmeldung: 09.06.1993
(73) Patentinhaber: Philips Patentverwaltung GmbH, 22335 Hamburg (DE); Koninklijke Philips Electronics N.V., 5621 BA Eindhoven (NL)
(72) Erfinder: Hecht, Wilfried, c/o Philips Patentverwaltung GmbH, W-2000 Hamburg 1 (DE)
(74) Vertreter: Volmer, Georg, Dipl.-Ing.

(56) Entgegenhaltungen:
- EP-A- 0 494 752
- GB-A- 2 250 156
- ELECTRICAL COMMUNICATION Bd. 63, Nr. 3, 1989, ROMFORD, ESSEX, GB Seiten 257 - 262 , XP85098 P. BARZAGLI, P COVONI 'Fibre Optic Video Surveillance System for Milan Subway'
- CCITT RECOMMENDATION H.261 1990, GENEVE, CH Seiten 1 - 27 'LINE TRANSMISSION ON NON TELEPHONE SIGNALS, VIDEO CODEC FOR AUDIOVISUAL SERVICES AT p x 64 kbits/s'
- CCITT IX TH PLENARY ASSEMBLY, BLUE BOOK Bd. III, Nr. 3.4, 25. November 1988, MELBOURNE, AUSTRALIA Seiten 375 - 381 'GENERAL ASPECTS OF DIGITAL TRANSMISSION SYSTEMS; TERMINAL EQUIPMENTS ( Recommendations G.700 G.797)' Recommendation G.732

## Beschreibung

Die Erfindung betrifft eine Videoüberwachungsanlage.

Derartige Überwachungsanlagen sind allgemein bekannt. Beispiele hierfür sind Anlagen zur Überwachung von Schalterräumen in Banken, von Bahnhöfen und von Straßen. Solche Überwachungsanlagen sind wegen ihrer analogen Bausteine für eine kostengünstige Fernüberwachung nicht geeignet.

Aus US 4.511.886 ist beispielsweise eine solche Videoüberwachungsanlage mit einer zentralen Empfangsstation bekannt, die über ein Koaxialkabel mit einer Vielzahl von Fernüberwachungsstationen verbunden werden kann. In jeder Fernüberwachungsstation ist ein Auswahlschalter angeordnet, der unter anderem dazu dient, aus einer Vielzahl von angeschlossenen Überwachungskameras ein Videobild auszuwählen. Das jeweils ausgewählte Videobild wird als Standbild übertragen, wobei es in einem Videokompressor zunächst digitalisiert wird, um es dann zeitlich gedehnt mit entsprechend niedrigerer Datenübertragungsrate einem Modulator zuzuführen. Der Modulator einer jeweiligen Fernüberwachungsstation setzt das eingehende Signal in eine Frequenzlage um, die sich von Frequenzlagen der anderen Fernüberwachungsstationen unterscheidet. Über einen Richtkoppler wird dieses Signal auf das Koaxialkabel eingekoppelt.

Auf diese Weise können mit dem aus US 4,511,886 beschriebenen System gleichzeitig die Videostandbilder von bis zu 250 Fernüberwachungsstationen übertragen und an der zentralen Empfangsstation empfangen werden. Des weiteren enthält die zentrale Überwachungsstation einen Steuerrechner, mittels welchem die angeschlossenen Fernüberwachungsstationen ferngesteuert werden können, beispielsweise aus den angeschlossenen Videokameras einer jeden Fernüberwachungsstation eine bestimmte Videokamera ausgewählt werden kann.

Der Erfindung liegt die Aufgabe zugrunde, eine Videoüberwachungsanlage anzugeben, die sich auch für eine kostengünstige Fernüberwachung eignet.

Diese Aufgabe wird mit den im Anspruch 1 angegebenen Mitteln gelöst:

Durch die Verwendung datenreduzierender Coder und eines entsprechenden Decoders ist eine Fernüberwachung über einen 2 Mbit/s-Kanal möglich (vgl. hierzu die CCITT-Empfehlungen H.261 und H.120).Diese Empfehlungen ermöglichen auch eine weitere Datenreduktion, die eine Fernüberwachung über Kanäle mit noch geringerer Bandbreite zuläßt. Ohne die Datenreduktion müßten Kanäle mit einer Datenrate von 140 Mbit/s verwendet werden. Anhand eines Ausführungsbeispieles und anhand der Figur soll die Erfindung nun erläutert werden.

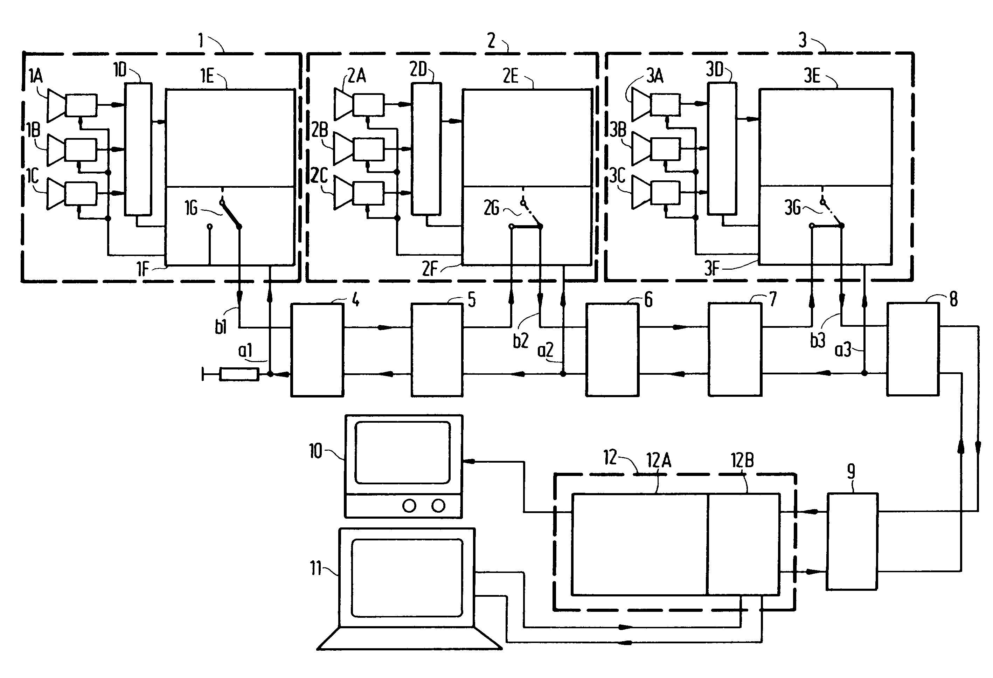

Die Fig. 1 zeigt ein Ausführungsbeispiel der Erfindung.

Wie der Figur zu entnehmen ist, besteht die Videoüberwachungsanlage aus drei identischen Sendeeinheiten 1, 2, 3, einer Fernleitung als Busleitung mit Leitungsendgeräten 4 bis 9 und mit Adern a1, a2, a3, b1, b2, b3 für die Hin- und Rückleitung, aus einer Empfangseinheit 12 mit einem Monitor 10 und aus einem Steuerrechner 11. Die Bezeichnung Sendeeinheit bzw. Empfangseinheit wurde entsprechend der überwiegenden Funktionsweise dieser Einheiten gewählt.

Die Sendeeinheit 3 enthält drei Videokameras 3A, 3B und 3C, sowie eine Videokreuzschiene 3D, über die wahlweise eine der Kameras mit einem H.261-Coder 3E verbunden werden kann. Als H.261-Coder wird hier ein Coder bezeichnet, der entsprechend der CCITT-Empfehlung H.261 konstruiert ist. Entsprechendes gilt für einen Decoder.

über eine Steuereinheit 3F und einen steuerbaren Umschalter 3G sind die Daten des H.261-Coders 3E über die Ader b3 der Fernleitung und über die Leitungsendgeräte 8 und 9 an die Empfangseinheit 12 übertragbar.

Der steuerbare Umschalter 3G ist Bestandteil der Steuereinheit 3F und wird von ihr gesteuert. In der eingezeichneten Stellung des Umschalters 3G ist die Sendeeinheit 3 von der Fernleitung derart abgetrennt, daß sie für die Übertragung von Sendedaten der anderen Sendeeinheiten 1 und 2 verwendbar ist.

In der anderen Stellung des Umschalters 3G wird die Ader b3 der Fernleitung aufgetrennt und die Sendeeinheit 3 mit einem offenen Ende der Ader b3 verbunden.

Entsprechendes gilt für die Sendeeinheiten 1 und 2 mit ihren Kameras 1A, 1B, 1C, 2A, 2B, 3C , ihren Kreuzschienen 1D, 2D, ihren Codierern 1E, 2E, ihren Steuereinheiten 1F, 2F und mit ihren Umschaltern 1G und 2G.

Eine Ausnahme macht die Steuerung des Umschalters 1G, also der Umschalter derjenigen Sendeeinheit, die am Ende der Fernleitung liegt. Dieser Umschalter wird so gesteuert, daß er während des Betriebes immer an die Fernleitung angeschlossen bleibt.

Die Sendeeinheiten 1, 2, 3 und die Empfangseinheit 12 mit ihrer Steuereinheit 12B und ihrem H.261-Decoder 12A sind bei Inbetriebnahme der Überwachungsanlage zuerst einzuschalten. Nach dem Einschalten dieser Geräte werden die Bilder der zufällig angeschlossenen Kameras von den H.261-Codern 1E, 2E und 3E codiert und mit sogenannten Nebeninformationen als Codersignal mit einer Struktur, wie sie die H.261-Empfehlung vorsieht, an die angeschlossenen Steuereinheiten 1F, 2F und 3F weitergeleitet.Die Steuereinheiten 1F, 2F und 3F bauen das Codersignal eines jeden Videobildes mit weiteren Informationen in die Rahmen eines Multiplexsignals ein, das nach den CCITT-Empfehlungen G.732 und G.704 strukturiert ist.

Zu den weiteren Informationen gehören:
- die vorher vereinbarte Adresse der Sendeeinheit,
- die vorher vereinbarte Adresse der angeschlossenen Kamera,
- Daten über die Stellung der angeschlossenen Kamera,
- Daten über das Zoom der angeschlossenen Kamera.

Die Bitrate des Multiplexsignal beträgt 2 Mbit/s.

Auf dem Monitor 10 werden nach dem Einschalten der Sendeeinheiten 1, 2, 3 und der Empfangseinheit 12 die Bilder derjenigen Sendeeinheit angezeigt, die aufgrund der Stellung der Umschalter 2G, 3G in der Lage ist, Daten an die Empfangseinheit 12 zu übertragen. Der gezielte Einsatz der Überwachungsanlage erfolgt durch Einschalten des Steuerrechners 11, der über eine bidirektionale Leitung mit der Steuereinheit 12B des H.261-Decoders 12A verbunden ist.

Nach dem Booten überträgt der Steuerrechner 11 ein Startsignal an die Steuereinheit 12B. Die Folge des Startsignals ist, daß die Steuereinheit 12B, die das empfangene 2 Mbit/s-Signal eines der Sendeeinheiten in das Codersignal und die weiteren Informationen zerlegt, das Codersignal durch Schwarzbilddaten ersetzt, d.h. durch Werte, die auf dem Monitor 10 als schwarz angezeigt werden. Dieses Ersetzen wird solange vorgenommen, bis der Pufferspeicher des H.261-Decoders einmal mit diesen Daten überschrieben worden ist. Dieser Vorgang nimmt - wie man anhand der Bitraten und der Kapazität des Pufferspeichers von etwa 240 kbit ausrechnen kann - etwa zwei zehntel Sekunden in Anspruch. Ist ein Zähler, der diese Zeit mißt, übergelaufen, sendet die Steuereinheit 12B ein "freeze picture request"-Signal (ein externes Steuersignal nach der H.261-Empfehlung) an den Decoder, der daraufhin das angezeigte Schwarzbild einfriert. Das "freeze picture request"-Signal wird alle sechs Sekunden wiederholt. Hierfür ist ein zweiter periodisch laufender Zähler vorgesehen, bei dessen Überlauf das genannte Signal abgegeben wird. Anderenfalls würde der Decoder 12A versuchen, die empfangenen Bilder zu decodieren.

Nun kann der Benutzer auf dem Keyboard des Steuerrechners 11 die Adressen derjenigen Sendeeinheit eingeben, dessen Bilder er zu sehen wünscht. Gleichzeitig kann er die Adressen einer der Kameras eingeben, die zur gewünschten Sendeeinheit gehört. Außerdem hat er die Möglichkeit, die Stellung und das Zoom der gewünschten Kamera vorzugeben. Sind diese Daten eingegeben, werden sie von der Steuereinheit 12A zu einem 2 Mbit/s-Telegramm zusammengefaßt, das ebenfalls nach den Empfehlungen G.732 und G.704 strukturiert ist. Es wird über die Rückleitung des bidirektionelen Übertragungskanals an die Sendeeinheiten 1,2,3 übertragen. Gleichzeitig mit dem Absenden dieses Telegramms wird ein Überlauf des zweiten Zählers erzwungen.

Das abgesendete Telegramm wird über Leitungen al, a2 und a3 allen Empfangseinheiten zugeführt. Die Steuereinheiten lF, 2F und 3F prüfen nun, ob die im Telegramm enthaltene Adresse ihre eigene Adresse ist. Falls nein, wird der Umschalter 2G oder 3G in eine Stellung gebracht, in der die Empfangseinheiten von der Fernleitung getrennt sind. Falls ja, wird die Empfangseinheit von ihrer Steuereinheit an die Fernleitung angeschlossen.

Im vorliegenden Beispiel wird die Empfangs leitung 3 angeschlossen. Mit dem Anschluß generiert die Steuereinheit 3F ein "fast update request"-Signal für den H.261-Coder 3E. Dieses Signal (ebenfalls ein externes Steuersignal nach der H.261-Empfehlung) veranlaßt den Coder 3E das nächstfolgende Bild im sogenannten INTRA-Modus zu codieren. In diesem Modus hängen die codierten Bilddaten nicht mehr von vorangegangenen Bildern ab.

Mit dem Anschließen der Sendeeinheit 3 werden zwangsläufig Bilder oder auch Teilbilder des Coders 3E übertragen noch bevor das "fast update request"-Signal wirksam wird. Diese Bilder werden jedoch nicht auf dem Monitor 10 angezeigt, da sich der Decoder 12A noch im Zustand "freeze" befindet (mindestens 6 Sekunden nach dem erzwungenen Überlauf des zweiten Zählers bzw. nach der Übertragung des Telegramms mit der Adresse der Sendeeinheit 3).

Wird vom Coder 3E ein Bild im INTRA-Modus codiert, so wird dieser Modus im Codersignal durch den Wert 1 eines sogenannten "freeze picture release"-Bit angezeigt (ein internes Steuersignal nach der H.261-Empfehlung).

Verarbeitet der Decoder 12A ein Codersignal mit diesem Bit, wird der Zustand "freeze" aufgehoben und die decodierten Daten des im INTRA-Modus codierten Bildes werden auf dem Bildschirm angezeigt.Auf diese Weise ergibt sich ein ungestörter Übergang von den Schwarzbildern zu den Bildern der gewünschten Kamera.

Wie oben schon erwähnt, ist in dem 2Mbit/s-Multiplexsignal der Sendeeinheit 3 auch deren Adresse enthalten; diese Adresse wird von der Steuereinheit 12B abgefragt und mit der zuvor eingegebenen gewünschten Adresse verglichen. Bei erstmaliger Übereinstimmung wird der zweite Zähler angehalten, damit kein weiteres "freeze picture request"-Signal mehr an den Decoder 12A abgegeben wird. Außerdem wird ein Quittungssignal zum Steuerrechner 11 gesendet.

Will der Benutzer die Bilder einer anderen Kamera der gleichen Sendeeinheit oder die einer anderen Sendeeinheit betrachten, so hat er die zugehörigen Adressen in Steuerrechner 11 einzugeben. Mit den Daten, die der Steuerrechner 11 dann an die Steuereinheit 12B weitergibt, baut diese wieder ein Telegramm auf und schickt es an alle Sendeeinheiten. Gleichzeitig wird beim zweiten Zähler ein Überlauf erzwungen, also wieder ein "freeze picture request"-Signal an den Decoder 12A übertragen. Mit diesem Signal wird ein Bild der zuletzt angeschlossenen Kamera eingefroren. Erkennt die Steuereinheit der adressierten Sendeeinheit ihre Adresse, erzeugt sie für ihren Coder ein "fast update request"-Signal. Das nun im INTRA-Modus codierte Bild des Coders enthält wiederum das schon erwähnte und gesetzte "freeze picture release"-Bit, so daß sich auf dem Monitor 10 ein nahtloser übergang vom eingefrorenen Bild der einen Kamera auf die Bewegtbilder der anderen Kamera ergibt.

Empfängt die Steuereinheit 12B überhaupt kein Signal, so hat das diegleichen Folgen wie die Übertragung eines Startsignales vom Steuerrechner 11; es wird auf dem Monitor 10 ein Schwarzbild angezeigt, und das so lange, bis der Fehler behoben ist oder die Anlage abgeschaltet wird.

Für die Konstruktion der gesammten Anlage werden überwiegend im Handel erhältliche Bausteine benötigt. Zu diesen Bausteinen gehören unter anderm die Coder 1E bis 3E und der Decoder 12A mit dem Monitor 10, die einstellbaren Kameras 1A bis 3C, die Videokreuzschienen 1D bis 3D und der Steuerrechner 11. Die 2 Mbit/s-Übertragungsstrecke läßt sich von Netzbetreibern mieten.

Für die Konstruktion der Steuereinheiten 1F bis 3F und 12B benötigt man zunächst Leitungsschnittstellen G.703 für die Verbindung der Fernleitung. Zur Übertragung von Codersignalen werden X.21-Schnittstellen benötigt. Die externen Steuersignalen zu den Codern bzw. zum Decoder laufen über V.11-Schnittstellen.

Für die Verbindung der Steuereinheiten 1G bis 3G mit den Kameras und den Videokreuzschienen sind V.10-Schnittstellen erforderlich und für die Verbindung der Steuereinheit 12G mit dem Steuerrechner 11 braucht man eine V.24-Schnittstelle.

Die oben angegebenen Funktionen der Steuereinheiten 1F bis 3F und 12B werden durch entsprechend programmierte Mikroprozessoren ausgeführt, deren Programmierung dem Fachmann aufgrund der gemachten Angaben möglich ist. Entsprechendes gilt für den Steuerrechner 11. Die Adressen der Sendeeinheiten werden durch DIL-Schalter eingestellt, die mit den Mikroprozessoren verbunden sind.

## Patentansprüche

1. Videoüberwachungsanlage mit einer Empfangseinheit (12), die mittels einer busstrukturierten Fernleitung (b1, b2, b3) mit einer Vielzahl von Sendeeinheiten (2) verbunden werden kann,
wobei
- an jeder Sendeeinheit (2) mindestens eine Videokamera (2A) anschließbar ist und die Sendeeinheit (2) einen datenreduzierenden Coder (2E) umfaßt, mittels welchem die Bandbreite des Videosignals einer aus den angeschlossenen Videokameras ausgewählten Videokamera (2A) reduziert wird, sowie an jeder Sendeeinheit (2) ein Koppelelement vorgesehen ist, mittels welchem das bandbreitenreduzierte Videosignal in die Fernleitung eingekoppelt wird und des weiteren an jeder Sendeeinheit (2) eine Steuereinheit (2F) vorgesehen ist, welche aus ankommenden Steuerinformationen entsprechende Steuersignale zur Steuerung der jeweiligen Sendeeinheit (2) erzeugt;
- die Empfangseinheit (12) eine dem datenreduzierenden Coder entsprechenden Decoder (12A) beinhaltet, welcher aus einem datenreduzierten Videosignal ein vollständiges Videosignal erzeugt, welches über einen an der Empfangseinheit (12) anschließbaren Monitor (10) angezeigt wird und des weiteren in der Empfangseinheit (12) ein Steuerrechner (11) zur Erzeugung von Steuerinformationen vorgesehen ist,
dadurch gekennzeichnet,
daß
- mittels des Steuerrechners (11) Steuerinformationen erzeugt werden, die zur Auswahl einer bestimmten Sendeeinheit (2) bestimmt sind,
- das Koppelelement jeder Sendeeinheit als steuerbarer Umschalter (2G) ausgestaltet ist, welcher bei entsprechender Steuerinformation des Steuerrechners (11) die Fernleitung (b1, b2, b3) auftrennt und das zur Empfangseinheit (12) ausgerichtete Ende der Fernleitung mit dem Coder (2E) verbindet und welcher anderenfalls die Fernleitung zu einer anderen Sendeeinheit weiterverbindet und
- die Empfangseinheit (12) dazu vorgesehen ist, bei Auswahl einer anderen Sendeeinheit (31) / Videokamera (2B) ein Steuersignal zu erzeugen, mittels welchem das neu ausgewählte Videobild erst dann am Monitor (10) angezeigt wird, nachdem der Videodecoder (12A) ein vollständiges Bild decodiert hat.

2. Videoüberwachungsanlage nach Anspruch 1
dadurch gekennzeichnet,
daß die Empfangseinheit (12) dazu vorgesehen ist, bei Wechsel von einer ersten ausgewählten Sendeeinheit (31) / Videokamera (2B) auf eine zweite Sendeeinheit (21) / Videokamera (2A) das zuletzt empfangene Videobild der ersten Sendeeinheit (31) / Videokamera (3B) als Standbild auf dem Monitor (10) anzuzeigen, bis das neue Videobild der neu ausgewählten, zweiten Sendeeinheit (21) / Videokamera (2A) vom Decoder (12A) vollständig decodiert ist.

3. Videoüberwachungsanlage nach Anspruch 1 oder 2,
dadurch gekennzeichnet,
daß die Steuereinheiten (1F, 2F, 3F) der Coder dafür vorgesehen sind, im Betriebsfall die Bits abgehender Informationen in ein Multiplexsignal vorgegebener Rahmenstruktur einzuordnen.

4. Videoüberwachungsanlage nach einem der vorhergehenden Ansprüche,
dadurch gekennzeichnet,
daß für jeden Decoder (12A) eine Steuereinheit (12B) vorgesehen ist, die im Betriebsfall Signale des Steuerrechners (11) und ankommende Multiplexsignale analysiert und in Signale für den Steuerrechner (11), den Decodierer (12A) und in Multiplexsignale für die Codierer (1E, 2E, 3E) umsetzt.

5. Videoüberwachungsanlage nach Anspruch 4,
dadurch gekennzeichnet,
daß die Steuereinheiten (12B) der Decoder (12A) dafür vorgesehen sind, im Betriebsfall die Bits abgehender Informationen in ein Multiplexsignal vorgegebener Rahmenstruktur einzuordnen.

6. Videoüberwachungsanlage nach Anspruch 4,
dadurch gekennzeichnet,
daß es sich bei dem Multiplexsignalen für die Busleitung (a1 bis a3; b1 bis b3; 4 bis 9) um Signale handelt, die den CCITT-Empfehlungen G.732 und G.704 entsprechen.

7. Videoüberwachungsanlage nach einem der vorhergehenden Ansprüche,
dadurch gekennzeichnet,
daß es sich bei den Codern und Decodern um solche handelt, die der CCITT-Empfehlung H.261 oder H.120 genügen, und daß die in den Empfehlungen vorgesehenen externen und internen Steuersignale im Betriebsfall dafür verwendet werden, beim Umschalten von einer Kamera auf die andere ungestörte Bilder anzuzeigen.

## Claims

1. A video monitoring system comprising a receiver unit (12) which is connectable to a multitude of transmitter units (2) by means of a bus-structured remote line (b1, b2, b3),
in which
- at least one video camera (2A) is connectable to each transmitter unit (2) and the transmitter unit (2) comprises a data-reducing coder (2E) by means of which the video signal bandwidth of a video camera (2A) selected from the connected video cameras is reduced, and each transmitter unit (2) is provided with a coupling element by means of which the bandwidth-reduced video signal is coupled into the remote line, and each transmitter unit (2) is further provided with a control unit (2F) which generates, from incoming control information, corresponding control signals for controlling the relevant transmitter unit (2);
- the receiver unit (12) comprises a decoder (12A) corresponding to the data-reducing coder and generating, from a data-reduced video signal, a complete video signal which is displayed via a monitor (10) connectable to the receiver unit (12), and the receiver unit (12) is further provided with a control computer (11) for generating control information,
characterized in that
- control information intended for selecting a given transmitter unit (2) is generated by means of the control computer (11),
- the coupling element of each transmitter unit is implemented as a controllable switch (2G) which splits the remote line (b1, b2, b3) upon corresponding control information from the control computer (11) and connects the end of the remote line oriented towards the receiver unit (12) to the coder (2E) and, in the other case, through-connects the remote line to another transmitter unit,
- the receiver unit (12) is adapted to generate, upon selection of another transmitter unit (31) / video camera (2B), a control signal by means of which the newly selected video picture is not displayed on the monitor (10) until after the video decoder (12A) has decoded a complete picture.

2. A video monitoring system as claimed in claim 1,
characterized in that
the receiver unit (12) is adapted to display the last received video picture from the first transmitter unit (31) / video camera (3B) as a still picture on the monitor (10) upon a change from a first selected transmitter unit (31) / video camera (2B) to a second transmitter unit (21) / video camera (2A) until the new video picture from the newly selected, second transmitter unit (21) / video camera (2A) has been completely decoded by the decoder (12A).

3. A video monitoring system as claimed in claim 1 or 2, characterized in that in the operating mode the control units (1F, 2F, 3F) of the coder are adapted to arrange the bits of outgoing information in a multiplex signal of a predetermined frame structure.

4. A video monitoring system as claimed in any one of the preceding claims, characterized in that a control unit (12B) is provided for each decoder (12A), which control unit analyses signals from the control computer (11) and incoming multiplex signals in the operating mode and converts them into signals for the control computer (11), the decoder (12A) and into multiplex signals for the coders (1E, 2E, 3E).

5. A video monitoring system as claimed in claim 4, characterized in that in the operating mode the control units (12B) of the decoder (12A) are adapted to arrange the bits of outgoing information in a multiplex signal of a predetermined frame structure.

6. A video monitoring system as claimed in claim 4, characterized in that signals corresponding to the CCITT Recommendations G.732 and G.704 are used as multiplex signals for the bus connection (alto a3; b1 to b3; 4 to 9).

7. A video monitoring system as claimed in any one of the preceding claims, characterized in that the system comprises coders and decoders complying with the CCITT Recommendation H.261 or H.120, and in that the external and internal control signals referred to in the Recommendations are used in the operating mode for displaying undisturbed pictures when switching from one camera to the other.

## Revendications

1. Installation de surveillance vidéo avec une unité réceptrice (12) qui peut être reliée à l'aide d'une ligne de transmission (b1, b2, b3) structurée en bus avec plusieurs unités de transmission (2),
- au moins une caméra vidéo (2A) pouvant être raccordée à chaque unité de transmission (2) et l'unité de transmission (2) comprenant un codeur (2E) réducteur de données à l'aide duquel la largeur de bande du signal vidéo d'une caméra vidéo (2A) sélectionnée parmi les caméras vidéo raccordées est réduite et un élément de couplage à l'aide duquel le signal vidéo dont la largeur de bande a été réduite est couplé à la ligne de transmission étant prévue sur chaque unité de transmission (2) et une unité de commande (2F) qui produit à partir des informations de commande entrantes des signaux de commande correspondants en vue de la commande de l'unité de transmission respective (2) étant prévue dans chaque unité de transmission (2);
- l'unité de réception (12) contenant un décodeur (12A) correspondant au codeur réducteur de données, lequel décodeur produit à partir d'un signal vidéo dont les données ont été réduites un signal vidéo complet qui est affiché par l'intermédiaire d'un moniteur (10) à raccorder à l'unité de réception (12) et, par ailleurs, un ordinateur de commande (11) étant prévu dans l'unité réceptrice (12) pour la production d'informations de commande,
caractérisé en ce que
- des informations de commande qui sont déterminées en vue de la sélection d'une unité de transmission déterminée (2) sont produites à l'aide de l'ordinateur de commande (11),
- l'élément de raccordement de chaque unité de transmission étant conçu comme un commutateur (2G) susceptible d'être commandé qui sépare en cas d'information de commande correspondante de l'ordinateur de commande (11) la ligne de transmission (b1, b2, b3) et relie l'extrémité de la ligne de transmission tournée vers l'unité de réception (12) avec le codeur (2E) et qui relie par ailleurs la ligne de transmission à une autre unité de transmission et
- l'unité de réception (12) est prévue pour qu'en cas de sélection d'une autre unité de transmission (31)/caméra vidéo (2B) un signal de commande à l'aide duquel l'image vidéo nouvellement sélectionnée ne soit affichée sur le moniteur (10) que lorsque le décodeur vidéo (12A) a décodé une image complète soit produit.

2. Dispositif de surveillance vidéo selon la revendication 1, caractérisé en ce
que l'unité réceptrice (12) est prévue pour que, lors de la transition d'une première unité de transmission (31)/caméra vidéo (2B) sélectionnée à une deuxième unité de transmission (21)/caméra vidéo (2A), l'image vidéo reçue en dernier lieu de la première unité de transmission (31)/caméra vidéo (3B) soit affichée comme une image fixe sur le moniteur (10) jusqu'à ce que la nouvelle image vidéo de la deuxième unité de transmission (21)/caméra vidéo (2A) nouvellement sélectionnée soit complètement décodée par le décodeur (12A).

3. Dispositif de surveillance vidéo selon l'une des revendications 1 ou 2,
caractérisé en ce
que les unités de commande (1F, 2F, 3F) du codeur sont prévues de telle sorte que les bits des informations de sortie se présentent en cas de fonctionnement sous la forme d'un signal de multiplexage d'une structure-cadre préalablement déterminée.

4. Installation de surveillance vidéo selon l'une des revendications précédentes,
caractérisé en ce
qu'il est prévu pour chaque décodeur (12A) une unité de commande (12B) qui, en service, analyse les signaux de l'ordinateur de commande (11) et les signaux de multiplexage entrants et les transforme en signaux pour l'ordinateur de commande (11), le décodeur (12A) et en signaux de multiplexage pour les codeurs (1E, 2E, 3E).

5. Dispositif de surveillance vidéo selon la revendication 4,
caractérisé en ce
que les unités de commande (12B) du décodeur (12A) sont prévues pour présenter en service les bits des informations de départ sous la forme d'un signal de multiplexage d'une structure cadre préalablement déterminée.

6. Dispositif de surveillance vidéo selon la revendication 4,
caractérisé en ce
que les signaux de multiplexage pour la ligne de bus (a1 à a3; b1 à b3: 4 à 9) sont des signaux qui correspondent aux recommandations CCITT G.732 et G. 704.

7. Dispositif de surveillance vidéo selon l'une des revendications précédentes,
caractérisé en ce
que les codeurs et décodeurs répondent aux recommandations CCITT H.261 ou H.120 et les signaux de commande externes et internes prévus dans les recommandations sont utilisés en service pour afficher des images sans parasite lors de la transition d'une caméra à une autre.
